# EUROPEAN PATENT APPLICATION

(11) **EP 4 312 292 A2**
(43) Date of publication of application: **31.01.2024**
(21) Application number: 23186138.6
(22) Date of filing: 18.07.2023
(51) Int. Cl.: H01M 10/04, H01M 10/0587

(54) **BATTERY COMPRISING A WOUND ELECTRODE BODY**

(30) Priority: 28.07.2022 JP 2022120874
(71) Applicant: Prime Planet Energy & Solutions, Inc., Chuo-ku Tokyo 103-0022 (JP)
(72) Inventor: MITA, Kazutaka, Tokyo, 103-0022 (JP); NOWATARI, Yuko, Tokyo, 103-0022 (JP); KUSADA, Hideo, Tokyo, 103-0022 (JP)
(74) Representative: Kuhnen & Wacker Patent- und Rechtsanwaltsbüro PartG mbB

(57) **Abstract**

One aspect of a battery herein disclosed is provided with a wound electrode body (20) in which a strip-shaped positive electrode (22) and a strip-shaped negative electrode (24) are wound around in a predetermined winding direction around a winding axis via a strip-shaped separator (70). The second separator (70B) includes a region positioned outward from a winding terminal edge of the first separator (70A); the second separator (70B) includes an extending portion (28) extending beyond the winding terminal edge of the first separator (70A) in the winding direction; at least a part of the extending portion (28) and a region positioned inward from the extending portion (28) in the second separator (70B) are bonded together with a second adhesive layer (74b2) existed on a surface of the second separator (70B); and a heat-resistant layer (73) is existed on an outermost surface of the wound electrode body (20).

## Description

### BACKGROUND

The present disclosure relates to a battery.

For example, Japanese patent No. 6260608 discloses a wound electrode body in which a negative electrode sheet, a first separator sheet, a positive electrode sheet, and a second separator sheet are wound around. Such a wound electrode body can be produced using an electrode production apparatus with a winding roller.

### SUMMARY

By the way, in producing a wound electrode body, a winding terminal stop tape is used to fix the winding terminal edge of a separator to a wound body. However, the configuration of an electrode production apparatus tends to be complicated by the mechanism providing such a winding terminal stop tape. Thus, further development of techniques that can obtain a wound electrode body simply and conveniently is required.

The present disclosure has been made in view of the above state, and a main object thereof is to provide a technique that can obtain a wound electrode body simply and conveniently.

In order to achieve such a purpose, the present disclosure provides a battery including a wound electrode body in which a strip-shaped positive electrode and a strip-shaped negative electrode are wound around in a predetermined winding direction around a winding axis via a strip-shaped separator, wherein the battery includes a first separator and a second separator as the separator; the second separator includes a region positioned outward from a winding terminal edge of the first separator; the second separator includes an extending portion extending beyond the winding terminal edge of the first separator in the winding direction; at least a part of the extending portion and a region positioned inward from the extending portion in the second separator are bonded together with a second adhesive layer existed on a surface of the second separator; and a heat-resistant layer is existed on an outermost surface of the wound electrode body.

According to the present disclosure, the winding terminal edge of a separator can suitably be fixed to a wound body in producing a wound electrode body (in this case, a wound electrode body in which a heat-resistant layer is disposed). That is, a technique that can obtain a wound electrode body simply and conveniently can be provided.

### BRIEF DESCRIPTION OF THE DRAWINGS

FIG. 1 is a perspective view schematically illustrating a battery according to one embodiment;
FIG. 2 is a schematic longitudinal cross-sectional view along the line II-II in FIG. 1;
FIG. 3 is a schematic lateral cross-sectional view along the line III-III in FIG. 1;
FIG. 4 is a schematic longitudinal cross-sectional view along the line IV-IV in FIG. 2;
FIG. 5A is a schematic view illustrating a configuration of a wound electrode body according to one embodiment;
FIG. 5B is a schematic view illustrating a wound electrode body according to one embodiment;
FIG. 6A is a schematic longitudinal cross-sectional view along the line VI-VI in FIG. 5B;
FIG. 6B is a schematic longitudinal cross-sectional view along the line VI-VI in FIG. 5B;
FIG. 6C is a schematic longitudinal cross-sectional view along the line VI-VI in FIG. 5B;
FIG. 7 is an enlarged view within the dashed line frame of FIG. 6A;
FIG. 8 is an enlarged view within the single-dotted frame of FIG. 6A;
FIG. 9 is an enlarged view within the solid line frame of FIG. 6A;
FIG. 10 is a schematic view illustrating configurations of a first separator and a second separator according to one embodiment;
FIG. 11 is an explanatory view for explaining a method for producing a wound electrode body according to one embodiment;
FIG. 12 is a schematic view illustrating the configurations of a first separator and a second separator according to a second embodiment;
FIG. 13 is a schematic view illustrating the configurations of a first separator and a second separator according to a third embodiment;
FIG. 14 is a schematic view illustrating the configurations of a first separator and a second separator according to a fourth embodiment; and
FIG. 15 is a schematic view illustrating the configurations of a first separator and a second separator according to a fifth embodiment.

### DETAILED DESCRIPTION

Hereinafter, some embodiments of the technique disclosed herein are described with reference to the drawings. Matters other than those specifically mentioned in the description but necessary for the implementation of the technique disclosed herein (for example, general configurations and production processes of batteries not characterizing the present technique) may be recognized as design matters of a person skilled in the art based on conventional techniques in the relevant art. The technique disclosed herein can be implemented based on the content disclosed in the present description and a common general technical knowledge in the art. The expression "A to B" indicating a range in the present description shall encompass a meaning of "over A" and "less than B", in addition to "A or more and B or less".

The term "battery" in the present description is a general term referring to storage devices capable of extracting electrical energy and is a concept encompassing primary batteries and secondary batteries. In addition, the term "secondary battery" in the present description is a general term referring to power storage devices capable of repeating charging and discharging by the movement of a charge carrier between positive and negative electrodes via electrolytes. The electrolyte may be any one of liquid electrolytes (electrolyte solutions), gel electrolytes, and solid electrolytes. Such secondary batteries encompass so-called storage batteries (chemical cells) such as lithium ion secondary batteries, nickel-metal hydride batteries, and capacitors (physical cells) such as electric double-layer capacitors. Hereinafter, an embodiment for a lithium ion secondary battery will be described.

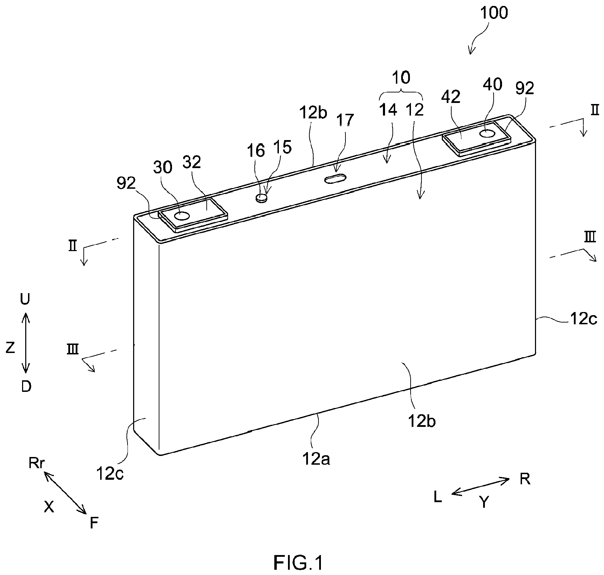

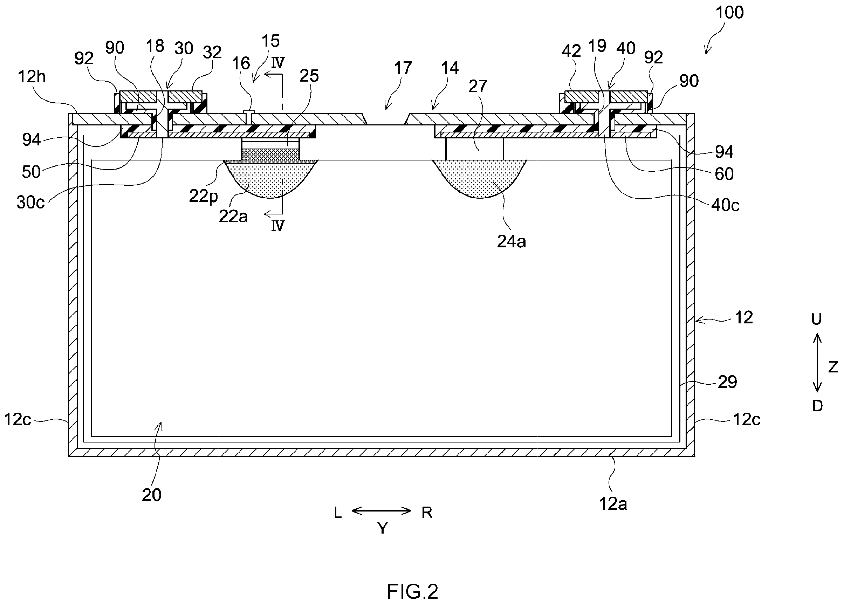

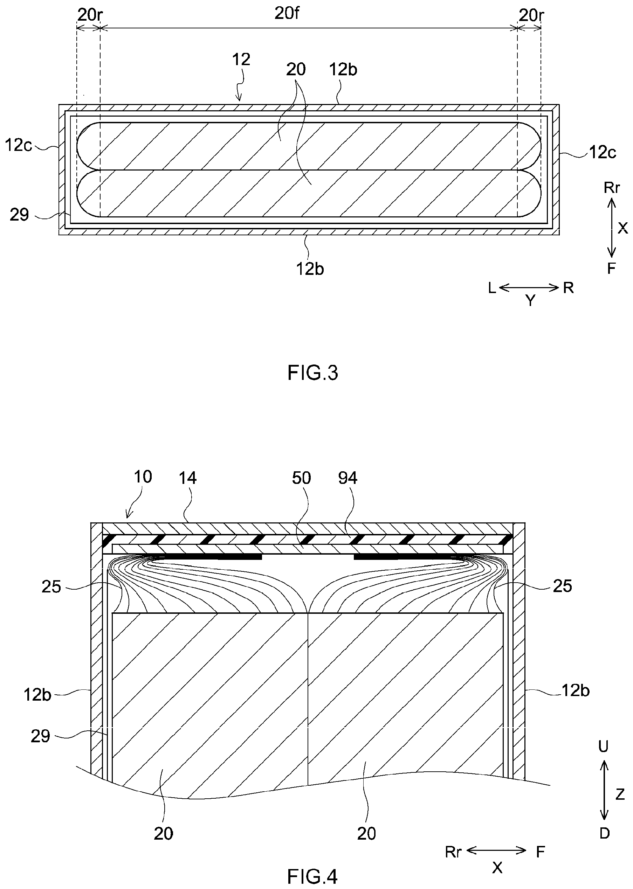

FIG. 1 is a perspective view schematically illustrating a battery 100 according to a first embodiment. The battery 100 is preferably a secondary battery and more preferably a non-aqueous electrolyte secondary battery such as a lithium ion secondary battery, for example. FIG. 2 is a schematic longitudinal cross-sectional view along the line II-II in FIG. 1. FIG. 3 is a schematic lateral cross-sectional view along the line III-III in FIG. 1. FIG. 4 is a schematic longitudinal cross-sectional view along the line IV-IV in FIG. 2. In the following description, symbols L, R, F, Rr, U, and D in the drawings denote left, right, front, rear, up, and down, respectively. The symbol X in the drawings denotes the short side direction of the battery 100, the symbol Y denotes the long side direction of the battery 100, and the symbol Z denotes the vertical direction of the battery 100. However, these are directions defined for explanatory convenience and are not intended to limit the mode of installation of the battery 100. Furthermore, D1 in the drawings indicates a winding direction, but is not intended to limit the winding direction to such directions.

As illustrated in FIGS. 1 to 3, the battery 100 includes a battery case 10 (see FIG. 1), a plurality of wound electrode bodies 20 (see FIGS. 2 and 3), a positive electrode terminal 30 (see FIGS. 1 and 2), a negative electrode terminal 40 (see FIGS. 1 and 2), a positive electrode current collector 50 (see FIG. 2), and a negative electrode current collector 60 (see FIG. 2). Although illustration is omitted, the battery 100 further includes an electrolyte solution in this embodiment. The battery 100 is a non-aqueous electrolyte secondary battery. Hereinafter, a specific configuration of the battery 100 will be described.

The battery case 10 is a housing that houses the wound electrode bodies 20. As illustrated in FIG. 1, the battery case 10 has a flat and bottomed rectangular parallelepiped (square) external shape in this embodiment. The material of the battery case 10 may be the same as one that has been conventionally used and is not particularly limited. The battery case 10 is preferably made of metal, and, for example, more preferably made of aluminum, an aluminum alloy iron, an iron alloy, and the like. As illustrated in FIG. 2, the battery case 10 includes an exterior body 12 with an opening 12h and a sealing plate (lid) 14 that seals the opening 12h. The exterior body 12 and the sealing plate 14 have sizes in accordance with the housing number (one or plural; plural in this embodiment), size, etc., of the wound electrode bodies 20.

As shown in FIGS. 1 and 2, the exterior body 12 is a bottomed square container with the opening 12h at the top surface. As illustrated in FIG. 1, the exterior body 12 includes a bottom wall 12a, a pair of long side walls 12b extending upward from the long sides of the bottom wall 12a and facing each other, and a pair of short side walls 12c extending upward from the short side of the bottom walls 12a and facing each other. The bottom wall 12a has a substantially rectangular shape. The bottom wall 12a faces the opening 12h (see FIG. 2). The long side walls 12b and short side walls 12c are examples of the "side walls". The sealing plate 14 is a flat, substantially rectangular plate-shaped member attached to the exterior body 12 so as to close the opening 12h of the exterior body 12. The sealing plate 14 faces the bottom wall 12a of the exterior body 12. The sealing plate 14 has a substantially rectangular shape. The battery case 10 is integrated by the sealing plate 14 being joined (for example, welded) to the periphery of the opening 12h of the exterior body 12. The battery case 10 is airtightly sealed (hermetically sealed) as such.

As illustrated in FIG. 2, the sealing plate 14 is provided with a liquid injection hole 15, a gas discharge valve 17, and terminal outlet holes 18 and 19. The liquid injection hole 15 is a through hole for injecting an electrolyte solution in the battery case 10 after assembling the sealing plate 14 to the exterior body 12. The liquid injection hole 15 is sealed with a sealing member 16 after the injection of the electrolyte solution. The gas discharge valve 17 is a thin wall part configured so as to fracture when the pressure in the battery case 10 rises over a predetermined value, thereby discharging gas in the battery case 10 to the outside.

As the electrolyte solution, those that have been used in conventionally known batteries may be used without any particular limitations. As one example, a non-aqueous electrolyte solution in which a supporting electrolyte is dissolved in a non-aqueous solvent can be mentioned. Examples of non-aqueous solvents include carbonate-based solvents such as ethylene carbonate, dimethyl carbonate, ethyl methyl carbonate, and the like. As an example of supporting electrolytes, a fluorine-containing lithium salt such as LiPF₆. The electrolyte solution may optionally contain an additive.

The positive electrode terminal 30 is attached to one edge (the left edges of FIGS. 1 and 2) in the long side direction Y of the sealing plate 14. The negative electrode terminal 40 is attached to the other edge (the right edges of FIGS. 1 and 2) in the long side direction Y of the sealing plate 14. The positive electrode terminal 30 and the negative electrode terminal 40 are inserted into the terminal outlet holes 18 and 19 and exposed at the outside surface of the sealing plate 14. The positive electrode terminal 30 is electrically connected to a plate-shaped positive electrode external conductive member 32 outside the battery case 10. The negative electrode terminal 40 is electrically connected to a plate-shaped negative electrode external conductive member 42 outside the battery case 10. The positive electrode external conductive member 32 and the negative electrode external conductive member 42 are connected to other secondary batteries or external apparatuses via an external connection member such as a busbar. The positive electrode external conductive member 32 and the negative electrode external conductive member 42 are preferably composed of metal with excellent electrical conductivity, and composed of, for example, aluminum, an aluminum alloy, copper, a copper alloy, and the like. However, the positive electrode external conductive member 32 and the negative electrode external conductive member 42 are not essential and may be omitted in other embodiments.

As illustrated in FIGS. 3 and 4, the battery 100 of the present embodiment houses a plural number of (specifically, two) wound electrode bodies 20 in the battery case 10. However, the number of wound electrode bodies placed in one exterior body 12 is not particularly limited and may be 3 or more (plural) or may be one. The detailed structure of a wound electrode body 20 will be described below, but as illustrated in FIG. 2, a positive electrode tab group 25 and a negative electrode tab group 27 protrude at the top of the wound electrode body 20. The battery 100 is a so-called upper tab structure in which the positive electrode tab group 25 and the negative electrode tab group 27 are positioned at the top of the wound electrode body 20. As illustrated in FIG. 4, the positive electrode tab group 25 curves in a state of being joined to the positive electrode current collector 50. Although illustration is omitted, the negative electrode tab group 27 curves in a state of being joined to the negative electrode current collector 60 similarly.

The positive electrode current collector 50 electrically connects the positive electrode tab group 25 of the wound electrode body 20 and the positive electrode terminal 30. As illustrated in FIG. 2, the positive electrode current collector 50 is a plate-shaped conductive member extending in the long side direction Y along the inner surface of the sealing plate 14. One edge (the right side of FIG. 2) of the positive electrode current collector 50 is electrically connected to the positive electrode tab group 25. The other edge (the left side of FIG. 2) of the positive electrode current collector 50 is electrically connected to a lower end part 30c of the positive electrode terminal 30. The positive electrode terminal 30 and the positive electrode current collector 50 are preferably composed of metal with excellent electrical conductivity, and composed of, for example, aluminum or an aluminum alloy.

The negative electrode current collector 60 electrically connects the negative electrode tab group 27 of the wound electrode body 20 and the negative electrode terminal 40. As illustrated in FIG. 2, the negative electrode current collector 60 is a plate-shaped conductive member extending in the long side direction Y along the inner surface of the sealing plate 14. One edge (the left side of FIG. 2) of the negative electrode current collector 60 is electrically connected to the negative electrode tab group 27. The other edge (the right side of FIG. 2) of the negative electrode current collector 60 is electrically connected to the lower end part 40c of the negative electrode terminal 40. The negative electrode terminal 40 and the negative electrode current collector 60 are preferably composed of metal with excellent electrical conductivity, and composed of, for example, copper or a copper alloy.

In the battery 100, various insulation members are used to prevent the conduction between the wound electrode body 20 and the battery case 10. For example, as illustrated in FIG. 1, the positive electrode external conductive member 32 and the negative electrode external conductive member 42 are insulated from the sealing plate 14 by an external insulation member 92. Furthermore, as illustrated in FIG. 2, gaskets 90 are mounted in each of the terminal outlet holes 18 and 19 of the sealing plate 14. This prevents the positive electrode terminal 30 and the negative electrode terminal 40 inserted in the terminal outlet holes 18 and 19 from being conducted with the sealing plate 14. In addition, internal insulation members 94 are placed between the positive electrode current collector 50 or the negative electrode current collector 60 and the inner surface side of the sealing plate 14. This can prevent the positive electrode current collector 50 and the negative electrode current collector 60 from being conducted with the sealing plate 14. The internal insulation member 94 may have a protrusion that protrudes toward the wound electrode body 20.

Furthermore, a plurality of wound electrode bodies 20 are placed in the exterior body 12 in a state of being covered with an electrode holder 29 (see FIG. 3) composed of an insulating resin sheet. This prevents the wound electrode bodies 20 from coming into direct contact with the exterior body 12. The material of various insulation members described above is not particularly limited as long as the material has a certain insulating property. Examples of such materials include synthetic resin materials, including polyolefin resins such as polypropylene (PP) and polyethylene (PE); and fluororesins such as perfluoroalkoxyalkanes and polytetrafluoroethylene (PTFE).

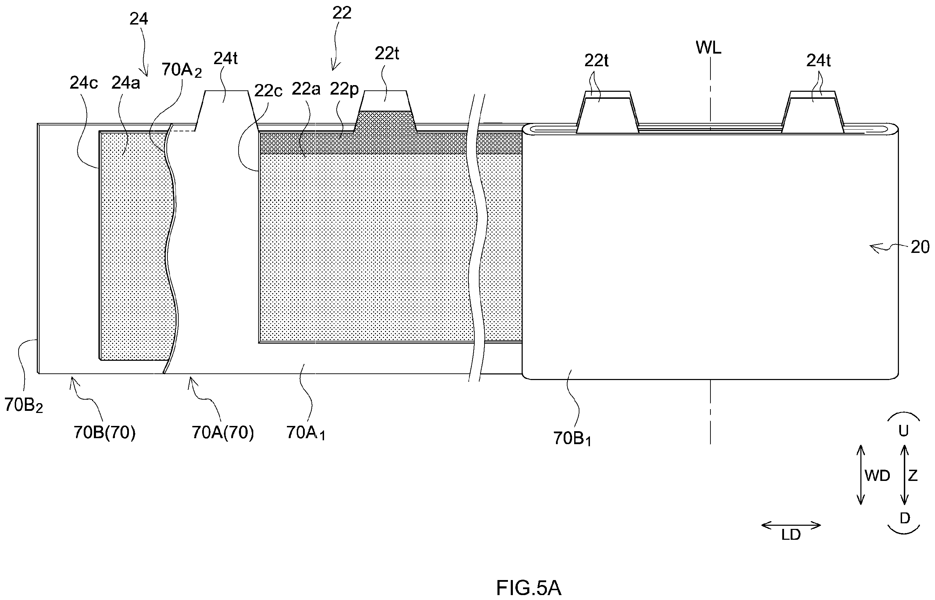

FIG. 5A is a schematic view illustrating the configuration of a wound electrode body 20. As illustrated in FIG. 5A, the wound electrode body 20 is configured such that the strip-shaped positive electrode 22 and the strip-shaped negative electrode 24 are laminated in an insulated state via two strip-shaped separators 70, and wound in the longitudinal direction around a winding axis WL. The symbol LD in FIG. 5A and the like represents the longitudinal direction (that is, the carrying direction) of the wound electrode body 20 and the separator 70 produced in the strip shape. The symbol WD represents a direction substantially perpendicular to the longitudinal direction LD and the winding axis direction (also the width direction) of the wound electrode body 20 and the separator 70. The winding axis direction WD is substantially parallel to the vertical direction Z of the battery 100 mentioned above.

The wound electrode body 20 has a flat exterior shape in this embodiment. The wound electrode body 20 preferably has a flat shape. For example, the flat-shaped wound electrode body 20 can be formed by press-molding an electrode body wound into a cylindrical shape (tubular body) is press-molded into a flat shape. As illustrated in FIG. 3, the flat-shaped wound electrode body 20 has a pair of curved parts 20r with outer curved surfaces and a pair of flat parts 20f with flat outer surfaces connecting the pair of curved parts 20r.

In the battery 100, the wound electrode body 20 is housed in the battery case 10 such that the winding axis direction WD substantially matches the vertical direction Z. In other words, the wound electrode body 20 is placed in the battery case 10 in a direction such that the winding axis direction WD is substantially parallel to the long side walls 12b and the short side walls 12c and is substantially perpendicular to the bottom wall 12a and the sealing plate 14. As illustrated in FIG. 3, the pair of curved parts 20r face the pair of short side walls 12c of the exterior body 12. A pair of flat parts 20f face the long side walls 12b of the exterior body 12. Edge surfaces of the wound electrode body 20 (that is, the lamination surface in which the positive electrode 22 and the negative electrode 24 are laminated; both ends in the winding axis direction WD of FIG. 5A) face the bottom wall 12a and the sealing plate 14.

The positive electrode 22 is a strip-shaped member, as illustrated in FIG. 5A. The positive electrode 22 is provided with a strip-shaped positive electrode current collector 22c, and a positive electrode active material layer(s) 22a and a positive electrode protective layer(s) 22p fixed to at least one surface of the positive electrode current collector 22c. The positive electrode active material layers 22a are preferably formed on both surfaces of the positive electrode current collector 22c from the viewpoint of battery performance.

In the various members constituting the positive electrode 22, those that have been used in common batteries (for example, lithium ion secondary batteries) without any particular limitations. For example, the positive electrode current collector 22c is preferably composed of a conductive metal such as aluminum, an aluminum alloy, nickel, and stainless steel, and a metal foil, specifically an aluminum foil, in this embodiment.

As illustrated in FIG. 5A, a plurality of positive electrode tabs 22t protrude from one edge side in the winding axis direction WD toward the outside (the upper side of FIG. 5A) in the positive electrode 22. The plurality of positive electrode tabs 22t are disposed at regular intervals (intermittently) along the longitudinal direction LD. The positive electrode tabs 22t are parts of the positive electrode 22 in this embodiment. The positive electrode tabs 22t are regions where the positive electrode active material layer 22a is not formed. At a part of the positive electrode tabs 22t, the positive electrode protective layer 22p is formed in this embodiment. However, the positive electrode protective layer 22p may not be formed in the positive electrode tabs 22t. A positive electrode current collector 22c is exposed at at least a part of the positive electrode tabs 22t. The positive electrode tabs 22t may be separate components from the positive electrode 22.

Each of the plurality of positive electrode tabs 22t is in a trapezoidal shape in this embodiment. However, the shape of the positive electrode tabs 22t is not limited thereto. Furthermore, the size of the positive electrode tabs 22t is not particularly limited. The shape and size of the positive electrode tabs 22t can be adjusted as appropriate depending on the formed position thereof and the like, considering the connected state of the positive electrode current collector 50, for example. The plurality of positive electrode tabs 22t are stacked at one edge (the upper edge in FIG. 5A) in the winding axis direction WD of the positive electrode 22 to configure the positive electrode tab group 25 (see FIG. 2).

As illustrated in FIG. 5A, the positive electrode active material layer 22a is disposed in the form of a band along the longitudinal direction LD of the positive electrode current collector 22c. The width (the length in the winding axis direction WD; the same applies hereinafter) of the positive electrode active material layer 22a is smaller than the width of the negative electrode active material layer 24a. The positive electrode active material layer 22a contains a positive electrode active material capable of reversibly occluding and releasing charge carriers. The positive electrode active material is preferably a lithium-transition metal composite oxide. Among them, a material containing Ni is more preferred. A lithium-nickel-cobalt-manganese composite oxide may be mentioned as an example of lithium transition metal composite oxides containing Ni. The positive electrode active material layer 22a may contain other optional ingredients than positive electrode active materials, such as binders, conductive materials, various additive components, and the like. The positive electrode active material layer 22a preferably contains a binder and a conductive material in addition to a positive electrode active material. The binder is typically made of resin. Among them, fluororesins such as polyvinylidene fluoride (PVdF) are preferred. Carbon materials such as acetylene black (AB) are preferred as the conductive material.

The positive electrode protective layer 22p is configured such that the electric conductivity of the positive electrode protective layer 22p becomes lower than that of the positive electrode active material layer 22a. As illustrated in FIG. 5A, the positive electrode protective layer 22p is disposed in the form of a band along the longitudinal direction LD of the positive electrode current collector 22c. The positive electrode protective layer 22p is disposed at the border between the positive electrode current collector 22c and the positive electrode active material layer 22a in the winding axis direction WD. The positive electrode protective layer 22p is disposed at one edge in the winding axis direction WD of the positive electrode current collector 22c, specifically the edge of the side where the positive electrode tabs 22t are present (the upper edge of FIG. 5A) in this embodiment. Providing the positive electrode protective layer 22p can prevent the positive electrode 22 from coming into direct contact with the negative electrode active material layer 24a and internal short circuits from occurring in the battery 100 when the separator 70 is broken.

The positive electrode protective layer 22p contains an insulating inorganic filler. Ceramic particles such as aluminum can be mentioned as one example of an inorganic filler. The positive electrode protective layer 22p may contain other optional ingredients than inorganic fillers, such as binders, conductive materials, and various additive components. The binder and the conductive material may be the same as those mentioned as examples of materials that the positive electrode active material layer 22a can contain. However, the positive electrode protective layer 22p is not essential and may be omitted in other embodiments.

The negative electrode 24 is a strip-shaped member, as illustrated in FIG. 5A. The negative electrode 24 is provided with a strip-shaped negative electrode current collector 24c and a negative electrode active material layer(s) 24a fixed to at least one surface of the negative electrode current collector 24c. The negative electrode active material layers 24a are preferably formed on both surfaces of the negative electrode current collector 24c from the viewpoint of battery performance.

In the various members constituting the negative electrode 24, those that have been used in common batteries (for example, lithium ion secondary batteries) without any particular limitations. For example, the negative electrode current collector 24c is preferably composed of a conductive metal such as copper, a copper alloy, nickel, and stainless steel, and a metal foil, specifically a copper foil, in this embodiment.

As illustrated in FIG. 5A, negative electrode tabs 24t protrude from one edge in the winding axis direction WD toward the outside (the upper side of FIG. 5A) in the negative electrode 24. The plurality of negative electrode tabs 24t are disposed at regular intervals (intermittently) along the longitudinal direction LD. In the winding axis direction WD, the negative electrode tabs 24t are disposed on at the edge of the same side as the positive electrode tabs 22t. The negative electrode tabs 24t are parts of the negative electrode 24 in this embodiment. The negative electrode tab 24t are regions where the negative electrode active material layer 24a is not formed, and the negative electrode current collector 24c is exposed in this embodiment. However, a part of the negative electrode active material layer 24a may protrude to the negative electrode tabs 24t and be fixed. The negative electrode tabs 24t may be separate components from the negative electrode 24.

Each of the plurality of negative electrode tabs 24t is in a trapezoidal shape in this embodiment. However, the shape and size of the plurality of negative electrode tabs 24t can be adjusted as appropriate as with the positive electrode tabs 22t. The plurality of negative electrode tabs 24t are stacked at one edge (the upper edge in FIG. 5A) in the winding axis direction WD of the negative electrode 24 to configure the negative electrode tab group 27 (see FIG. 2).

As illustrated in FIG. 5A, the negative electrode active material layer 24a is disposed in the form of a band along the longitudinal direction LD of the negative electrode current collector 24c. The width of the negative electrode active material layer 24a is larger than the width of the positive electrode active material layer 22a. The width of the negative electrode active material layer 24a refers to the length in the winding axis direction WD of the part where the thickness is substantially constant, and, for example, even if a part of the negative electrode active material layer 24a protrudes to the negative electrode tabs 24t and is fixed, the width shall not include the part of the negative electrode tabs 24t. The negative electrode active material layer 24a contains a negative electrode active material capable of reversibly occluding and releasing charge carriers. For example, the negative electrode active material may preferably be carbon materials such as graphite and silicon materials. The negative electrode active material layer 24a may contain other optional ingredients than negative electrode active materials, such as binders, conductive materials, various additive components, and the like. The negative electrode active material layer 24a preferably contains a binder in addition to a positive electrode active material. The binder may contain rubbers such as styrene butadiene rubber (SBR) and celluloses such as carboxymethylcellulose (CMC). The negative electrode active material layer 24a may optionally contain a carbon material as a conductive material.

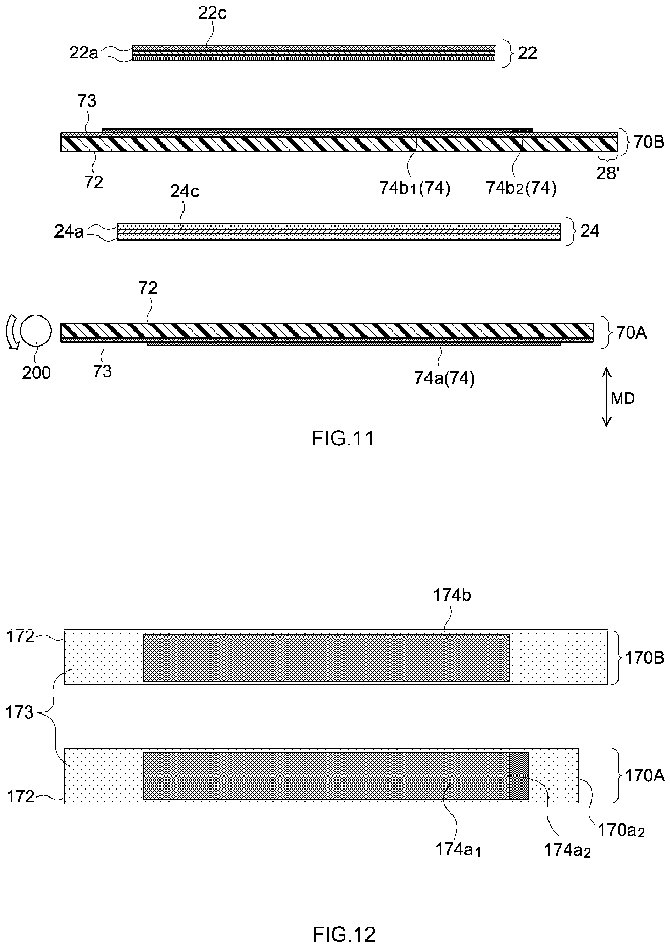

The separator 70 is a strip-shaped member, as illustrated in FIGS. 5A and 11. The separator 70 is an insulation sheet with a plurality of fine through holes through which electric charge carriers can pass. The width of the separator 70 is greater than the width of the negative electrode active material layer 24a. Interposing the separator 70 between the positive electrode 22 and the negative electrode 24 can prevent the positive electrode 22 and the negative electrode 24 from coming into contact with each other and move electric charge carriers (for example, lithium ions) between the positive electrode 22 and the negative electrode 24. Although not particularly limited, the thickness (the length in the stacked direction MD; the same applies hereinafter) of the separator 70 is preferably 4 µm or more, more preferably 7 µm or more, and still more preferably 10 µm or more. The thickness of the separator 70 is preferably 30 µm or less, more preferably 25 µm or less, and still more preferably 20 µm or less.

Two sheets of the separator 70 are used in one wound electrode body 20. It is preferred that one wound electrode body 20 includes two sheets of the separator 70, that is, a first separator and a second separator, as in the present embodiment. In this case, two separators each have different configurations, but the two may have similar configurations.

As the substrate layer 72, microporous films that have been used in conventionally known battery separators may be used without any particular limitations. The substrate layer 72 is preferably a porous sheet-shaped member. The substrate layer 72 may have a single-layer structure or a structure with two or more layers, for example, a structure with three layers. It is preferred that at least a surface of the substrate layer 72 facing the negative electrode 24 is composed of a polyolefin resin. The whole of the substrate layer 72 is preferred to be composed of a polyolefin resin. This ensures sufficient flexibility of the separator 70 and facilitates the fabrication (winding and press molding) of the wound electrode body 20. As polyolefin resins, polyethylene (PE), polypropylene (PP), or a mixture of these is preferred, and it is further preferred that the substrate layer 72 is composed of PE.

Although not particularly limited, the thickness (the length in the stacked direction MD; the same applies hereinafter) of the substrate layer 72 is preferably 3 µm or more, more preferably 5 µm or more, and still more preferably 7 µm or more. The thickness of the substrate layer 72 is preferably 30 µm or less, more preferably 20 µm or less, and still more preferably 15 µm or less. The air permeability of the substrate layer 72 is preferably 30 sec/100 cc to 500 sec/100 cc, more preferably 30 sec/100 cc to 300 sec/100 cc, and still more preferably 50 sec/100 cc to 200 sec/100 cc. The substrate layer 72 may have adhesive properties to the extent that it is bonded to the negative electrode active material layer 24a by heating, press forming, or the like, for example.

The heat-resistant layer 73 is disposed on the substrate layer 72. The heat-resistant layer 73 is preferably formed on the substrate layer 72. The heat-resistant layer 73 may be disposed directly on the surface of the substrate layer 72 or disposed above the surface of the substrate layer 72 via another layer. However, the heat-resistant layer 73 is not essential and may be omitted in other embodiments. The heat-resistant layer 73 is disposed on the entire surface of the substrate layer 72 facing the positive electrode 22 in this embodiment. This can more precisely suppress the thermal shrinkage of the separator 70 and contribute to improving the safety of the battery 100. The heat-resistant layer 73 does not have adhesive properties to the extent that it is bonded to the positive electrode active material layer 22a by heating, press forming, or the like, for example. The weight per area of the heat-resistant layer 73 is homogeneous in the longitudinal direction LD and the winding axis direction WD of the separator 70 in this embodiment. Although not particularly limited, the thickness (the length in the stacked direction MD; the same applies hereinafter) of the heat-resistant layer 73 is preferably 0.3 µm or more, more preferably 1 µm or more, and still more preferably 2 µm or more. The thickness of the heat-resistant layer 73 is preferably 10 µm or less, more preferably 8 µm or less, and still more preferably 6 µm or less. The heat-resistant layer 73 preferably contains an inorganic filler and a heat-resistant layer binder.

As the inorganic filler, those that have been used in this type of conventionally known applications may be used without any particular limitations. The inorganic filler preferably contains insulating ceramic particles. Among them, in consideration of the heat resistance, easy availability, etc., inorganic oxides such as alumina, zirconia, silica, and titania, metal hydroxides such as aluminum hydroxide, and clay minerals such as boehmite are preferred, and alumina and boehmite are more preferred. From the viewpoint of suppressing the heat shrinkage of the separator 70, compounds containing aluminum are particularly preferred. The proportion of the inorganic filler in relation to the total mass of the heat-resistant layer 73 is preferably 85% by mass or more, more preferably 90% by mass or more, and still more preferably 95% by mass or more.

As the heat-resistant layer binder, those that have been used in this type of conventionally known applications may be used without any particular limitations. Specific examples thereof acrylic resins, fluororesins, epoxy resins, urethane resins, ethylene vinyl acetate resins, and the like. Among them, an acrylic resin is preferred.

An adhesive layer 74 is disposed on the surface facing the positive electrode 22 and in contact with the positive electrode 22. As illustrated in FIG. 11, the adhesive layer 74 is preferably formed at least on the surface of the positive electrode 22 of the separator 70. This will better demonstrate the effects as described above. The adhesive layer 74 is bonded to the positive electrode 22 by heating, press forming (typically press-molding), or the like, for example. Although not particularly limited, the thickness (the length in the stacked direction MD; the same applies hereinafter) of the adhesive layer 74 is preferably 0.1 µm or more, more preferably 0.5 µm or more, and still more preferably 1 µm or more. The thickness of the adhesive layer 74 is preferably 6 µm or less, more preferably 4 µm or less, and still more preferably 2 µm or less.

The adhesive layer 74 is disposed on the heat-resistant layer 73 in this embodiment. The adhesive layer 74 is preferably formed on the heat-resistant layer 73. The adhesive layer 74 may be disposed directly on the surface of the heat-resistant layer 73 or disposed above the heat-resistant layer 73 via another layer. The adhesive layer 74 may be disposed directly on the surface of the substrate layer 72 or disposed above the substrate layer 72 via a layer other than the heat-resistant layer 73. The configuration of the adhesive layer 74 is not particularly limited and may be similar to the conventionally known one. The adhesive layer 74 has a relatively higher affinity to electrolyte solutions than the heat-resistant layer 73, for example, and may be a layer that absorbs an electrolyte liquid to swell. The adhesive layer 74 contains an adhesive layer binder.

As the adhesive layer binder, conventionally known resin materials with a certain viscosity to the positive electrode 22 may be used without any particular limitations. Specific examples thereof include acrylic resins, fluororesins, epoxy resins, urethane resins, ethylene vinyl acetate resins, polyallylamine (PAA) resins, cellulose resins such as carboxymethylcellulose (CMC), and the like. Among them, fluororesins and acrylic resins are preferred because they have high flexibility and can suitably exert adhesive properties to the positive electrode 22. Examples of fluororesins include polyvinylidene fluoride (PVdF), polytetrafluoroethylene (PTFE), and the like. The type of adhesive layer binder may be the same as or different from the heat-resistant layer binder. The proportion of the heat-resistant layer binder in relation to the total mass of the adhesive layer 74 is preferably 20% by mass or more, more preferably 50% by mass or more, and still more preferably 70% by mass or more. This allows to exert predetermined adhesive properties to the positive electrode 22 surely and also allows the separator 70 to deform easily in the press molding.

The adhesive layer 74 may contain other materials (for example, inorganic fillers listed as the component of the heat-resistant layer 73, etc.) in addition to the adhesive layer binder. When the adhesive layer 74 contains inorganic filler, the proportion of the inorganic filler in relation to the total mass of the adhesive layer 74 is preferably 80% by mass or less, more preferably 50% by mass or less, and still more preferably 30% by mass or less.

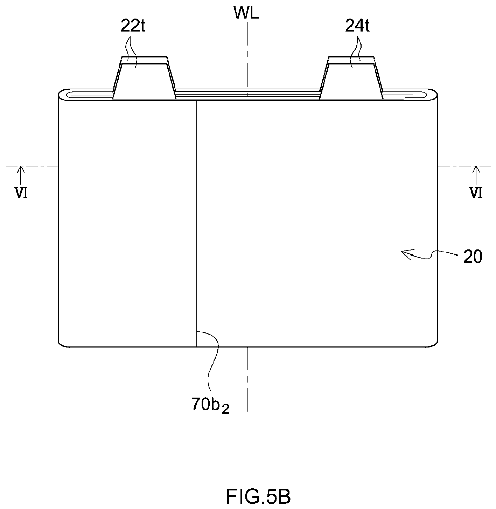

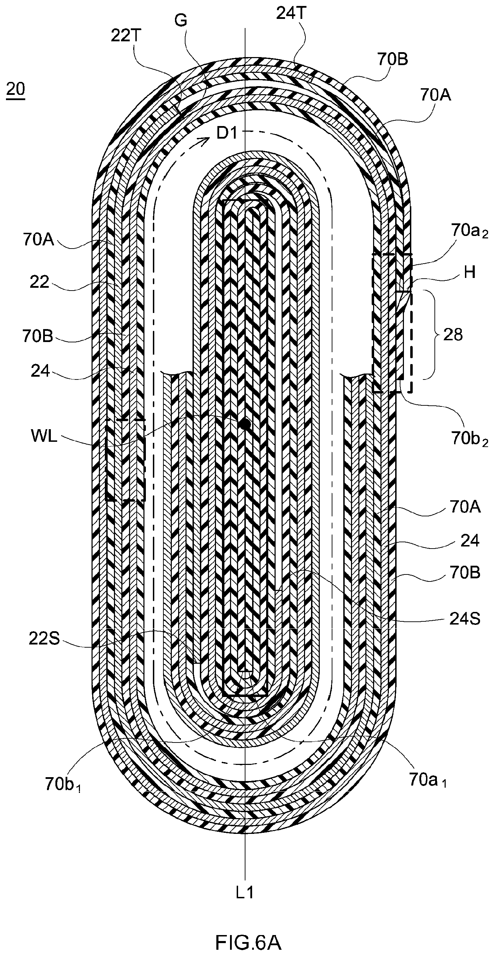

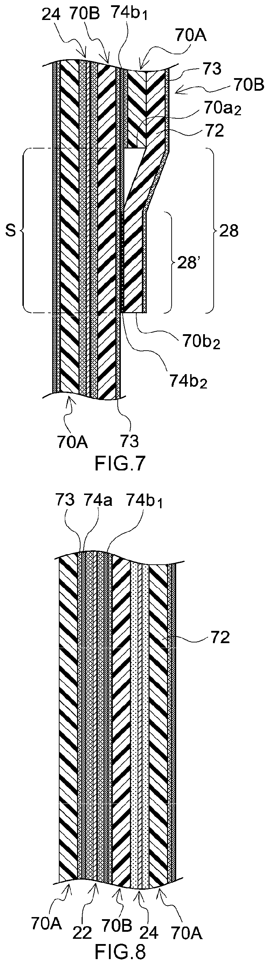

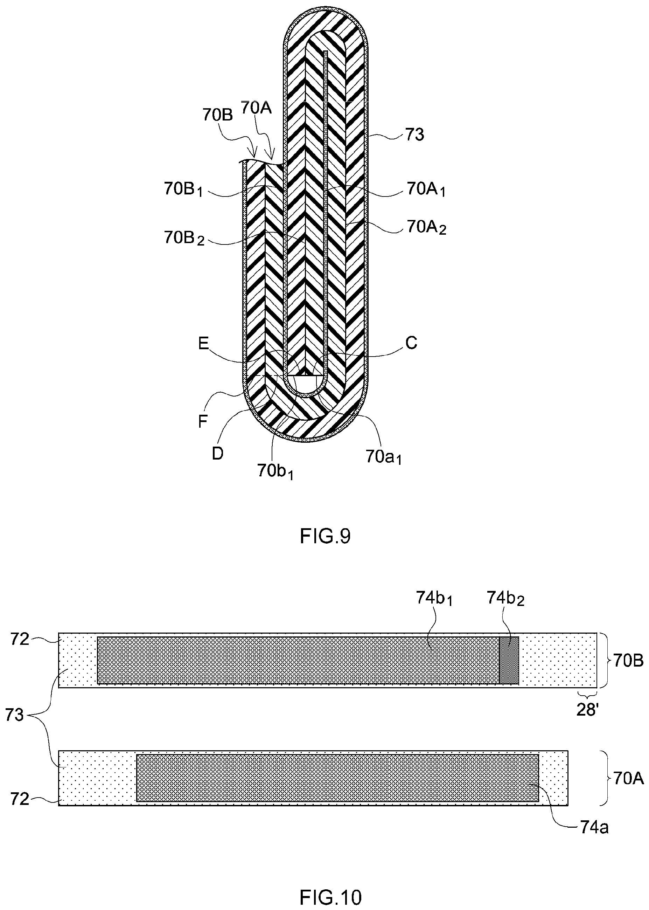

Next, the configuration of the wound electrode body 20 is described, referring to the drawings as appropriate. Here, FIGS. 6A to 6C are schematic longitudinal cross-sectional views along the line VI-VI in FIG. 5B. FIG. 7 is an enlarged view within the dashed line frame of FIG. 6A. FIG. 8 is an enlarged view within the single-dotted frame of FIG. 6A. FIG. 9 is an enlarged view within the solid line frame of FIG. 6A. In the following explanations, the adhesive layers formed on the first separator 70A are expressed as first adhesive layers, and the adhesive layers formed on the second separator 70B are expressed as second adhesive layers. A first adhesive layer 74a encompasses the region facing the positive electrode 22. Among the second adhesive layers, second adhesive layers that encompass the region facing the positive electrode 22 are expressed as second adhesive layers 74bi, and the second adhesive layers formed on the surface inside the extending portion 28 are expressed as second adhesive layers 74b₂.

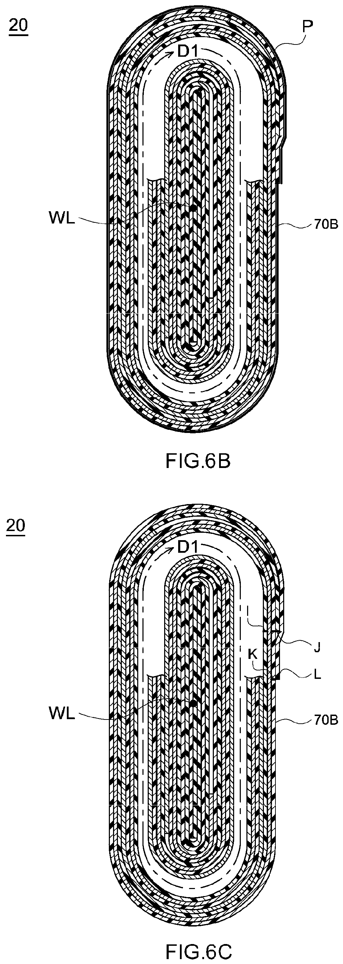

As illustrated in FIG. 6A, the wound electrode body 20 includes the first separator 70A and the second separator 70B as separators. The second separator 70B has a region positioned outward from a winding terminal edge 70a₂ of the first separator. As illustrated in FIGS. 6A and 7, the second separator 70B has an extending portion 28 extending beyond the winding terminal edge 70a₂ of the first separator in the winding direction D 1, and at least a part of the extending portion 28 and a region S positioned inward from the extending portion 28 in the second separator 70B are bonded together with a second adhesive layer 74b₂ formed on a surface of the second separator 70B. On the outermost surface (see P in FIG. 6B) of the wound electrode body 20, a heat-resistant layer 73 is disposed. According to such a configuration, the winding terminal edge of the separator (the winding terminal edge 70b₂ of the second separator in this embodiment) can suitably be fixed to the wound body in the production of the wound electrode body 20, also in the case of not using a winding terminal stop tape, for example. This allows to omit a providing mechanism of winding terminal stop tapes, which can complicate the configuration of the electrode body production apparatus, and thus, to obtain the wound electrode body 20 by an electrode body production apparatus simply and conveniently.

As illustrated in FIG. 7, the substrate layer 72 in the extending portion 28 (a part 28' of the extending portion 28 in this embodiment) is bonded with a second adhesive layer 74b₂ formed on the second separator 70B positioned inward from the extending portion 28. More specifically, the second adhesive layer 74b₂ is formed on the heat-resistant layer 73 in the second separator 70B positioned inward from the extending portion 28, and the inner surface of the substrate layer 72 in the extending portion 28 and the second adhesive layer 74b₂ are bonded together.

As illustrated in FIG. 6B, the wound electrode body 20 has a second separator 70B that does not face the positive electrode 22 on the outermost surface thereof in the present embodiment. Here, the length in the winding direction D1 of the extending portion 28 is, for example, 10% or more when the length of the outermost periphery (corresponding to P in FIG. 6B) of the wound electrode body 20 is set to 100%, and from the viewpoint of suitably fixing the extending portion 28 to the wound body, the length is preferably 15% or more and more preferably 20% or more. Furthermore, the upper limit of the length in the winding direction D1 of the extending portion 28 is, for example, 40% or less in relation to the length of the outermost periphery of the wound electrode body 20, and is preferably 30% or less from the viewpoint of cost saving, etc. However, the upper limit is not limited thereto.

The length in the winding direction D1 of the extending portion 28 is, for example, 350° or larger with respect to the length of the outermost periphery (corresponding to P in FIG. 6B) of the wound electrode body 20, and from the viewpoint of suitably fixing the extending portion 28 to the wound body, the length is preferably 370° or larger (for example, 372° or larger), more preferably 390°or larger, and still more preferably 400° or larger (for example, 405° or larger). The upper limit of the length in the winding direction D1 of the extending portion 28 is, for example, 750° or smaller, and from the cost saving and the like, the upper limit is preferably 720° or smaller and, for example, 700° or smaller with respect to the length of the outermost periphery of the wound electrode body 20. However, the length is not limited thereto.

The length in the winding direction D1 of the extending portion 28 is, for example, 5 mm or longer, and from the viewpoint of suitably fixing the extending portion 28 to the wound body, the length is preferably 10 mm or longer, more preferably 15 mm or longer, and still more preferably 20 mm or longer. Furthermore, the upper limit of the length in the winding direction D1 of the extending portion 28 is, for example, 700 mm or shorter, and from the cost saving and the like, the upper limit is preferably 60 mm or shorter and more preferably 50 mm or shorter. Furthermore, the length in the winding direction D1 of the extending portion 28 is preferred to be smaller than the height of the wound electrode body 20 (the width in the LD direction of the wound electrode body 20). However, the length is not limited thereto.

The area of the second adhesive layer 74b₂ formed in the region S positioned inward from the extending portion 28 in the second separator 70B is, for example, 10% or more when the area of the region S is set to 100%, and preferably 20% or more, and, for example, 30% or more, or 40% or more from the viewpoint of suitably improving the adhesive properties between the extending portion 28 and the region S positioned inward from the extending portion 28 in the second separator 70B. Furthermore, the second adhesive layer 74b₂ formed in the region S positioned inward from the extending portion 28 in the second separator 70B may be 100% (that is, a mode in which the second adhesive layer 74b₂ is formed over the entire surface of the region S), and is preferably 90% or less, and, for example, 80% or less, 70% or less, 60% or less, or 50% or less from the viewpoint of cost saving, etc.

In the present embodiment, in the second separator 70B, the weight per area of the second adhesive layer 74b₂ formed in the region S positioned inward from the extending portion 28 in the second separator 70B is larger than the weight per area of the second adhesive layer 74bi in the region facing the positive electrode 22. Such a configuration is preferred because the adhesive properties between the extending portion 28 and the region S positioned inward from the extending portion 28 in the second separator 70B can be suitably improved. In the present description and the claims, the term "weight per area" refers to a value obtained by dividing the mass of an adhesive layer by the area of a formed region (mass of adhesive layer/area of formed region).

Here, in the second separator 70B, when the weight per area of the second adhesive layer 74b₂ formed in the region S positioned inward from the extending portion 28 in the second separator 70B is taken as X, and the weight per area of the second adhesive layer 74b i in the region facing the positive electrode 22 is taken as Y, the value of the ratio (X/Y) is not particularly limited as long as the effect of the technique disclosed herein can be exerted. Meanwhile, from the viewpoint of suitably improving the adhesive properties between the extending portion 28 and the region S positioned inward from the extending portion 28 in the second separator 70B, the ratio (X/Y) is preferably 1.1 or more and may be, for example, 1.2 or more, or 1.3 or more. The upper limit of the ratio (X/Y) is preferably 2.0 or less, and may be, for example, 1.8 or less or 1.5 or less from the viewpoint of cost saving and the like. In another embodiment, the value of the ratio (X/Y) may be less than 1 or may be 1. The same applies to the first adhesive layer 174a₁ and 174a₂, 474a₁ and 474a₂, which will be described later.

Although not particularly limited, the weight per area of the second adhesive layer 74bi in the region facing the positive electrode 22 is, for example, 0.005 g/m² or more, preferably 0.01 g/m² or more, and more preferably 0.02 g/m² or more. The upper limit of the weight per area of the second adhesive layer 74bi is, for example, 2.0 g/m² or less, preferably 1.0 g/m² or less, and more preferably 0.05 g/m² or less.

Although not particularly limited, the weight per area of the second adhesive layer 74b₂ formed in the region S positioned inward from the extending portion 28 in the second separator 70B is, for example, 0.005 g/m² or more, preferably 0.01 g/m² or more, and more preferably 0.02 g/m² or more. The upper limit of the weight per area of the second adhesive layer 74b₂ is, for example, 2.0 g/m² or less, preferably 1.0 g/m² or less, and more preferably 0.05 g/m² or less.

As illustrated in FIG. 8, in the present embodiment, a second adhesive 74bi layer is formed in a region facing the positive electrode 22 in the second separator 70B, and the second separator 70B and the positive electrode 22 are bonded together with a second adhesive layer 74bi. In the first separator 70A, a first adhesive layer 74a is formed in the region facing the positive electrode 22, and the first separator 70A and the positive electrode 22 are bonded together with the first adhesive layer 74a. Here, a force to restore the wound electrode body 20 from a flat shape to a cylindrical shape (that is, springback) is considered to mainly derive from the expansion of the positive electrode 22 based on the charge and discharge of the battery 100. As in the present embodiment, the expansion of the positive electrode 22 can be suppressed by fixing the positive electrode 22 with the first adhesive layer 74a and the second adhesive layer 74bi, and this can suitably suppress such springback.

As illustrated in FIG. 8, in the present embodiment, no first adhesive layer is formed in a region of the first separator 70A facing the negative electrode 24, and no second adhesive layer is formed in a region of the second separator 70B facing the negative electrode 24. As described above, when the expansion of the positive electrode 22 is suppressed by the first adhesive layer 74a and the second adhesive layer 74bi, it is considered that an adhesive layer may not be formed in a region facing the negative electrode 24 (or if an adhesive layer is formed, the formed area thereof may be small). Such a configuration is preferred from cost saving, etc. because the amount of adhesive layers provided can be reduced. Furthermore, the reduction of the amount of adhesive layers allows the thickness of the wound electrode body 20 to be suitably reduced and the absorption of electrolyte solutions to be suitably suppressed.

Here, when the area of the surface on the side in contact with the negative electrode 24 of the second separator 70B (corresponding to 70B₂ in FIGS. 5A and 9) is set to 100%, the area of the second adhesive layer (or the first adhesive layer) in the region of the second separator 70B facing the negative electrode 24 (or the region of the first separator 70A facing the negative electrode 24) is, for example, 50% or less, and from the viewpoint of cost saving, reduction in thickness of the wound electrode body 20, suppression of electrolyte solution absorption, etc., the area is preferably 40% or less, or 30% or less, and may be, for example, 20% or less, 10% or less, or 5% or less (0% in the present embodiment).

As illustrated in FIG. 9, in the present embodiment, no first adhesive layer is formed in the winding beginning region of the first separator 70A on the surface on the side in contact with the positive electrode 22 of the first separator 70A (corresponding to 70A₁ in FIGS. 5A and 9). Furthermore, 70A₂ in FIG. 5A and 9 indicates the surface on the side in contact with the negative electrode 24 of the first separator 70A. Such a configuration is preferred from the cost saving, etc. because the amount of adhesive layers provided can be reduced. Furthermore, the reduction of the amount of adhesive layers allows the thickness of the wound electrode body 20 to be suitably reduced and the absorption of electrolyte solutions to be suitably suppressed. In the present description and the claims, the term "winding beginning region of the first separator" may mean, for example, the area in the first separator 70A from the winding beginning edge 70a₁ of the first separator to the first roll (corresponding to the region between C and D in FIG. 9), preferably to the second roll.

In another embodiment, a first adhesive layer may be formed in the winding beginning region of the first separator 70A on the surface on the side in contact with the positive electrode 22 of the first separator 70A. In such a case, the weight per area of the first adhesive layer in the winding beginning region of the first separator is preferably smaller than the weight per area of the first adhesive layer 74a in the region facing the positive electrode 22. Here, when the weight per area of the first adhesive layer 74a in the region facing the positive electrode 22 is set to 100%, the weight per area of the first adhesive layer in the winding beginning region of the first separator is, for example, 50% or less, and from the viewpoint of cost saving, reduction in thickness of the wound electrode body 20, suppression of electrolyte solution absorption, etc., the weight per area is preferably 40% or less, or 30% or less, and may be, for example, 20% or less, or 10% or less.

As illustrated in FIG. 9, in the present embodiment, no second adhesive layer is formed in the winding beginning region of the second separator 70B on the surface on the side in contact with the positive electrode 22 of the second separator 70B (corresponding to 70Bi in FIGS. 5A and 9). Such a configuration is preferred from the cost saving, etc. because the amount of adhesive layers provided can be reduced. Furthermore, the reduction of the amount of adhesive layers allows the thickness of the wound electrode body 20 to be suitably reduced and the absorption of electrolyte solutions to be suitably suppressed. In the present description and the claims, the term "winding beginning region of the second separator" may mean, for example, the area in the second separator 70B from the winding beginning edge 70bi of the second separator to the first roll (corresponding to the region between E and F in FIG. 9), preferably to the second roll.

In another embodiment, a second adhesive layer may be formed in the winding beginning region of the second separator 70B on the surface on the side in contact with the positive electrode 22 of the second separator 70B. In such a case, the weight per area of the second adhesive layer in the winding beginning region of the second separator is preferably smaller than the weight per area of the second adhesive layer 74bi in the region facing the positive electrode 22. Here, when the weight per area of the second adhesive layer 74bi in the region facing the positive electrode 22 is set to 100%, the weight per area of the second adhesive layer in the winding beginning region of the second separator is, for example, 50% or less, and from the viewpoint of cost saving, reduction in thickness of the wound electrode body 20, suppression of electrolyte solution absorption, etc., the weight per area is preferably 40% or less, or 30% or less, and may be, for example, 20% or less, 10% or less.

As illustrated in FIG. 6B, in the present embodiment, no second adhesive layer is formed on the outer surface (see P in FIG. 6B) of the second separator positioned on the outermost surface of the wound electrode body 20. Such a configuration is preferred from the cost saving, etc. because the amount of adhesive layers provided can be reduced. In addition, it is preferred from the viewpoint of easy handleability of the wound electrode body 20. Then, the reduction of the amount of adhesive layers allows the thickness of the wound electrode body 20 to be suitably reduced and the absorption of electrolyte solutions to be suitably suppressed.

In another embodiment, a second adhesive layer may be formed on the outer surface of the second separator 70B positioned on the outermost surface of the wound electrode body 20. In such a case, the weight per area of the second adhesive layer on the outer surface is preferably smaller than that of the second adhesive layer 74bi in the region facing the positive electrode 22. Here, when the weight per area of the second adhesive layer 74bi in the region facing the positive electrode 22 is set to 100%, the weight per area of the second adhesive layer on the outermost surface of the second separator 70B positioned on the outermost surface of the wound electrode body 20 is approximately 50% or less, and from the viewpoint of cost saving, reduction in thickness of the wound electrode body 20, suppression of electrolyte solution absorption, etc., the weight per area is preferably 40% or less, or 30% or less, and may be, for example, 20% or less, 10% or less.

As illustrated in FIG. 6C, in the present embodiment, no second adhesive layer is formed on the outer surface (see P in FIG. 6B) of the second separator 70B positioned on the outermost surface of the wound electrode body 20. The area of the second adhesive layer on the outer surface of the second separator 70B positioned on the outermost surface of the wound electrode body 20 is 30% or less of the area of the outer surface. Such a configuration is preferred from the cost saving, etc. because the amount of adhesive layers provided can be reduced. In addition, a small area of the adhesive layer on the outermost surface of the wound electrode body 20 is preferred from the viewpoint of easy handleability. The area of the second adhesive layer on the outer surface of the second separator 70B positioned on the outermost surface of the wound electrode body 20 may be 20% or less or 10% or less (0% in the present embodiment) of the area on such an outer surface.

In the present embodiment, the weight per area of the second adhesive layer in the entire second separator 70B is larger than the first adhesive layer in the entire first separator 70A. Specifically, since the weight per area of the second adhesive layer 74b₂ is large, the weight per area of the second adhesive layer of the entire second separator 70B is large. Such a configuration is preferred because the total amount of the adhesive layer can be optimized (in other words, excessive formation of the adhesive layer can be avoided), and reduction of the thickness of the wound electrode body 20, improvement of the impregnability of an electrolyte solution, suppression of electrolyte solution absorption, and the like, can thereby be realized. As the second separator 70B according to the present embodiment, when two types of second adhesive layers with different weight per areas (that is, a second adhesive layer 74bi and a second adhesive layer 74b₂) are formed, the weight per area of the second adhesive layer in the entire second separator 70B refers to a value obtained by dividing the sum of the masses of the second adhesive layer 74bi and the second adhesive layer 74b₂ by the sum of the areas of the formed region of the second adhesive layer 74bi and the second adhesive layer 74b₂ {(mass of second adhesive layer 74b₁ + mass of second adhesive layer 74b₂)/(area of formed region of second adhesive layer 74b₁ + area of formed region of second adhesive layer 74b₂)}.

Here, when the weight per area of the adhesive layer 74 of the entire second separator 70B is taken as M, and the weight per area of the adhesive layer 74 of the entire first separator 70A is taken as N, the value of the ratio (M/N) is not particularly limited as long as the effect of the technique disclosed herein can be exerted. Meanwhile, from the viewpoint of suitably obtaining the effect as described above, the ratio is preferably 1.1 or more, more preferably 1.2 or more, and, for example, 1.3 or more. The upper limit of the ratio (M/N) is, for example, 2.0 or less and may be 1.8 or less or 1.5 or less.

As illustrated in FIG. 6A, in the present embodiment, the first separator 70A and the second separator 70B are bonded together without the positive electrode 22 on the side closer to the winding beginning edge than the winding beginning edge 22S of the positive electrode 22 in the winding direction D1. In addition, the first separator 70A and the second separator 70B are bonded together without the positive electrode 22 on the side closer to the winding terminal edge than the winding terminal edge 22T of the positive electrode 22 in the winding direction D1. Here, 24S in FIG. 6A represents the winding beginning edge of the negative electrode 24.

As illustrated in FIG. 6A, in the present embodiment, a region where no second adhesive layer is formed exists in the region between the region facing the positive electrode 22 and the extending portion 28 (a region corresponding to the region between G and H in FIG. 6A) in the second separator 70B. Such a configuration is preferred from the cost saving, etc. because the amount of adhesive layers provided can be reduced. Furthermore, the reduction of the adhesive layers allows the thickness of the wound electrode body 20 to be suitably reduced and the absorption of electrolyte solutions to be suitably suppressed.

As illustrated in FIG. 6A, in the present embodiment, the difference between the winding beginning edge 70a₁ of the first separator and the winding beginning edge 70bi of the second separator in the winding direction D1 is smaller than the difference between the winding terminal edge 70a₂ of the first separator and the winding terminal edge 70b₂ of the second separator in the winding direction D1.

Although not particularly limited, when the length in the long direction (the LD direction in FIG. 5A) of the second separator 70B is taken as Q, and the length in the long direction of the first separator 70A is taken as R, the value of the ratio (Q/R) is, for example, 1.1 or more, and may be 1.2 or more, or 1.3 or more. The upper limit of the ratio (Q/R) is, for example, 1.5 or less and may be 1.4 or less.

In the present embodiment, the first separator 70A has regions where no first adhesive layer is formed in each of the winding beginning region and the winding terminal region of the first separator 70A. Furthermore, the second separator 70B has regions where no second adhesive layer is formed in each of the winding beginning region and the winding terminal region of the second separator 70B. In the present description and claims, the term "the winding terminal region of the first separator" may mean the region that becomes an outermost surface of the first separator 70A (corresponding to the region between I and J in FIG. 6C), for example. The term "the winding terminal region of the second separator" may mean the region that becomes the outermost surface of the second separator 70B (corresponding to the region between K and L in FIG. 6C), for example.

As illustrated in FIG. 6A, in the present embodiment, the winding terminal edge 22T of the positive electrode is positioned in one of the pair of curved parts 20r, and the winding terminal edge 24T of the negative electrode is positioned at one of the pair of the curved parts 20r. According to such a configuration, the occurrence of projections in the flat part 22f of the wound electrode body 20 can be suppressed. This can prevent localized stress application (particularly when formed into an assembled battery), and thus suitably suppress reaction unevenness, etc. In the present embodiment, the winding terminal edge 24T of the negative electrode extends beyond the winding terminal edge 22T of the positive electrode in the winding direction D1. Furthermore, as in the present embodiment, it is preferred that the winding terminal edge 22T of the positive electrode is placed on one side in the winding direction D1 with respect to the central line L1, and the winding terminal edge 24T of the negative electrode is placed on the other side in the winding direction D1. The winding terminal edge of a separator (the winding terminal edge 70b₂ of the second separator in this embodiment) may be placed in either the flat part 20f or the curved parts 20r of the wound electrode body 20. If the winding terminal edge of a separator is placed in the flat part 20f of the wound electrode body 20, the edge can be more surely fixed, which is thus preferred.

As illustrated in FIG. 6A, in the present embodiment, no winding terminal stop tape (a member that fixes the winding terminal edge of a separator to a wound body) is provided at the winding terminal edge 70b₂ of the second separator. Here, the use of a winding terminal stop tape is considered unfavorable from the battery performances and the like because electrolyte solutions tend to be absorbed by glues and the like contained in the winding terminal stop tape. Furthermore, with respect to the thickness of the wound body, projections may occur at the part where a winding terminal stop tape is provided, and reaction unevenness and the like may occur, which is thus considered unfavorable. Meanwhile, as the wound electrode body 20 according to the present embodiment, it is preferred to use a separator with a small thickness (the second separator 70B in this embodiment) in the winding terminal and not to provide a winding terminal stop tape because the problems as described above can be solved. Furthermore, as in the present embodiment, the battery 100 that houses a plurality of wound electrode bodies 20 in the battery case 10 can particularly produce the effect as described above because the winding terminal edge exists in each of the wound electrode body 20.

The internal insulation member 94 has a protrusion that protrudes from the inner surface of the sealing plate 14 toward the wound electrode body 20. This can restrict the movement of the wound electrode body 20 in the vertical direction Z. Thus, the wound electrode body 20 is less likely to interfere with the sealing plate 14 even when subjected to shocks such as vibration or dropping, and damage to the wound electrode body 20 can be suppressed.

### Method for Producing Battery

Next, a method for producing the battery 100 is described. The battery 100 disclosed herein is characterized by the method for producing the wound electrode body 20, and other steps relating to the method for producing the battery can be implemented in accordance with a conventionally known method. Thus, only the method for producing the wound electrode body 20 is described below.

FIG. 10 is a schematic view illustrating configurations of the first separator and the second separator. In addition, FIG. 11 is an explanatory view for explaining a method for producing a wound electrode body. As illustrated in FIG. 11, in producing the wound electrode body 20, a first separator 70A, a positive electrode 22, a second separator 70B, and a negative electrode 24 are prepared first. The shape of the second adhesive layer 74b₂ is rectangular in plan view in this embodiment, but, for example, may be other various shapes, such as a circular shape or an elliptical shape. Furthermore, the second adhesive layer 74b₂ may be formed in multiple divided pieces. Here, the first adhesive layer 74a, the second adhesive layer 74bi, and a second adhesive layer 74b₂ are preferably formed in a shape, such as dotted, striped, wavy, banded (striated), or dashed shapes in plan view, or a combination of these. This can improve the impregnability of the electrolyte solution to the inside of the wound electrode body 20. In the present description, the term "the formed region is formed linearly" means that the formed region itself is linear, and the adhesive layer itself may be a dotted shape or the like.

Next, each member is wound with a winding roller 200. After that, the wound body is pressed at a predetermined pressure to obtain wound electrode body 20. As described above, in the technique of the present disclosure, at least a part of the extending portion 28 and the region S positioned inward from the extending portion 28 in the second separator 70B are bonded together via the second adhesive layer 74b₂ formed on the surface of the second separator 70B. Thus, the winding terminal edge of a separator (the winding terminal edge 70b₂ of the second separator) can be suitably fixed to the wound body. After that, the wound body is pressed at a predetermined pressure to obtain wound electrode body 20. This can prevent the configuration of the electrode body production apparatus from being complicated and provide the wound electrode body 20 simply and conveniently.

### Application of Battery

The battery 100 may be used in various applications and, for example, may suitably be used as a power source (driving power supply) for motors mounted on vehicles such as passenger cars and trucks. Although the type of such vehicles is not particularly limited, plug-in hybrid electric vehicles (PHEV), hybrid electric vehicles (HEV), battery electric vehicles (BEV), and the like may be mentioned, for example. The battery 100 may be suitably used in the construction of an assembled battery because the variation of the battery reaction is suppressed.

Several embodiments of the present disclosure have been described above, but the above embodiments are merely examples. The present disclosure can be implemented in any other various forms. The present disclosure can be implemented based on the content disclosed in the present description and common general technical knowledge in the art. The techniques recited in claims encompass variations and modifications of the specific embodiments mentioned above by way of examples. For example, a part of the embodiment described above may be replaced with other variations, and other variations may be added to the embodiment described above. In addition, if some technical characteristics are not described as essential features, they may be omitted as appropriate.

For example, in the embodiment described above, the wound electrode body 20 is configured such that a plurality of the positive electrode tabs 22t and a plurality of the negative electrode tabs 24t protrude from the one edge in the winding axis direction WD toward the outside, but is not limited thereto. The technique disclosed herein can be applied to, for example, a wound electrode body in which a plurality of the positive electrode tabs 22t protrude from one edge in the winding axis direction WD toward the outside and a plurality of the negative electrode tabs 24t protrude from the other edge in the winding axis direction WD toward the outside. In addition, the technique disclosed herein may be applied to a wound electrode body in which positive electrode tabs 22t and negative electrode tabs 24t are not formed.

For example, no winding terminal stop tape is provided at the winding terminal edge 70b₂ of the second separator in the above embodiment, but the embodiment is not limited thereto. For example, a winding terminal stop tape may be provided at the winding terminal edge 70b₂ of the second separator. For example, such a winding terminal stop tape may be provided by forming a wound body by an electrode body production apparatus and the subsequent manual work and the like. As the winding terminal stop tape, those that have been used in this type of battery may be used without any particular limitations.

For example, in the embodiments described above, the winding terminal edge 22T of the positive electrode and the winding terminal edge 24T of the negative electrode are positioned in the curved parts 22r of the wound electrode body 20, but the embodiment is not limited thereto. For example, the winding terminal edge 24T of the positive electrode may be positioned in the curved parts 20r of the wound electrode body 20, and the winding terminal edge 24T of the negative electrode may be positioned in the flat part 20f of the wound electrode body 20. Such a configuration is preferred because the occurrence of projections in the flat part 22f of the wound electrode body 20 can be suppressed, and the shape of the curved part 20r is stable.

FIG. 12 is a schematic view illustrating the configurations of a first separator 170A and a second separator 170B according to a second embodiment. In the second embodiment, the weight per area of the first adhesive layer 174a₂ on the winding terminal edge 170a₂ side of the first separator is made larger than the weight per area of the first adhesive layer 174ai formed in a region facing the positive electrode in the first separator 170A. Furthermore, a second adhesive layer 174b is formed on the second separator 170B.

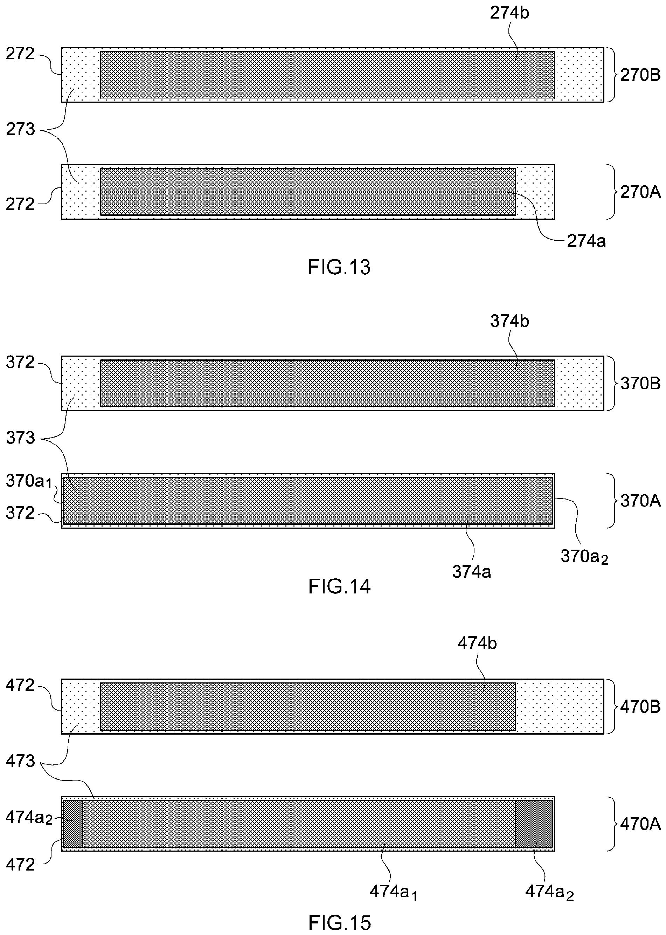

FIG. 13 is a schematic view illustrating the configurations of a first separator 270A and a second separator 270B according to a third embodiment. In the third embodiment, the width in the long side direction (LD direction) of the second adhesive layer 274b formed on the second separator 270B is made larger than the width in the long side direction of the first adhesive layer 274a formed on the first separator 270A.

FIG. 14 is a schematic view illustrating configurations of a first separator 370A and a second separator 370B according to a fourth embodiment. In the fourth embodiment, a first adhesive layer 374a is formed from the winding beginning edge 370a₁ of the first separator to the winding terminal edge 370a₂ of the first separator in the first separator 370A. In the second separator 370B, a second adhesive layer 374b is formed in a region other than the winding beginning region and the winding terminal edge region of the second separator.

FIG. 15 is a schematic view illustrating the configurations of a first separator 470A and a second separator 470B according to a fifth embodiment. In the fifth embodiment, first adhesive layers 474a₂ are formed in the winding beginning region and the winding terminal edge region of the first separator, and a first adhesive layer 474ai is formed between two first adhesive layers 474a₂ in the first separator 470A. The weight per area of the first adhesive layer 474a₂ is larger than the weight per area of the first adhesive layer 474a₁. In the second separator 470B, a second adhesive layer 474b is formed in a region other than the winding beginning region and the winding terminal edge region of the second separator.

The numerals 172, 272, 372, and 472 in FIGS. 12 to 15 shall correspond to the numeral 72 of FIG. 10, and the numerals 173, 273, 373, and 473 shall correspond to the numeral 73 of FIG. 10.

As stated above, the following items can be mentioned as specific embodiments of techniques disclosed herein.

Item 1: A battery comprising a wound electrode body in which a strip-shaped positive electrode and a strip-shaped negative electrode are wound around in a predetermined winding direction around a winding axis via a strip-shaped separator, wherein the battery includes a first separator and a second separator as the separator; the second separator includes a region positioned outward from a winding terminal edge of the first separator; the second separator includes an extending portion extending beyond the winding terminal edge of the first separator in the winding direction; at least a part of the extending portion and a region positioned inward from the extending portion in the second separator are bonded together with a second adhesive layer existed on a surface of the second separator; and a heat-resistant layer is existed on an outermost surface of the wound electrode body.

Item 2: The battery according to the item 1, wherein no winding terminal stop tape is disposed in the extending portion.

Item 3: The battery according to the item 1 or 2, wherein, in the second separator, the second adhesive layer is existed in a region facing the positive electrode, and the second separator and the positive electrode are bonded together with the second adhesive layer, and, in the first separator, a first adhesive layer is existed in a region facing the positive electrode, and the first separator and the positive electrode are bonded together with the first adhesive layer.

Item 4: The battery according to any one of the items 1 to 3, wherein the second adhesive layer is not existed, or the second adhesive layer is existed on an outer surface of the second separator positioned on an outermost surface of the wound electrode body, and when the second adhesive layer is existed, the second adhesive layer has a smaller weight per area on the outer surface than in a region facing the positive electrode.

Item 5: The battery according to any one of the items 1 to 4, wherein an area of the second adhesive layer on an outer surface of the second separator positioned on the outermost surface of the wound electrode body is 30% or less of an area of the outer surface.

Item 6: The battery according to any one of the items 1 to 5, wherein, on a surface on a side of the second separator in contact with the positive electrode, the second adhesive layer is not existed or the second adhesive layer is existed in a winding beginning region of the second separator, and when the second adhesive layer is existed, the second adhesive layer has a smaller weight per area in the winding beginning region of the second separator than in a region facing the positive electrode.

Item 7: The battery according to any one of the items 1 to 6, wherein, on a surface on a side of the first separator in contact with the positive electrode, a first adhesive layer is not existed, or the first adhesive layer is existed in a winding beginning region of the first separator, and when the first adhesive layer is existed, the first adhesive layer has a smaller weight per area in the winding beginning region of the first separator than in a region facing the positive electrode.

Item 8: The battery according to any one of the items 1 to 7, wherein, in the second separator, a weight per area of the second adhesive layer in a region positioned inward from the extending portion is larger than a weight per area of the second adhesive layer in a region facing the positive electrode.

Item 9: The battery according to any one of the items 1 to 8, wherein the wound electrode body has a flat shape; the wound electrode body includes a pair of curved parts in which outer surfaces are curved and a flat part in which an outer surface connecting a pair of the curved parts is flat; a winding terminal edge of the positive electrode is positioned at either of the pair of curved parts; and a winding terminal edge of the negative electrode is positioned at either of the pair of curved parts.

## Claims

1. A battery (100) comprising a wound electrode body (20) in which a strip-shaped positive electrode (22) and a strip-shaped negative electrode (24) are wound around in a predetermined winding direction around a winding axis via a strip-shaped separator (70), wherein
the battery (100) includes a first separator (70A) and a second separator (70B) as the separator (70);
the second separator (70B) includes a region positioned outward from a winding terminal edge of the first separator (70A);
the second separator (70B) includes an extending portion (28) extending beyond the winding terminal edge of the first separator (70A) in the winding direction;
at least a part of the extending portion (28) and a region positioned inward from the extending portion (28) in the second separator (70B) are bonded together with a second adhesive layer (74bz) existed on a surface of the second separator (70B); and
a heat-resistant layer (73) is existed on an outermost surface of the wound electrode body (20).

2. The battery (100) according to claim 1, wherein no winding terminal stop tape is disposed in the extending portion (28).

3. The battery (100) according to claim 1 or 2, wherein,
in the second separator (70B), the second adhesive layer (74bi) is existed in a region facing the positive electrode (22), and the second separator (70B) and the positive electrode (22) are bonded together with the second adhesive layer (74bi), and
in the first separator (70A), a first adhesive layer (74a) is existed in a region facing the positive electrode (22), and the first separator (70A) and the positive electrode (22) are bonded together with the first adhesive layer (74a).

4. The battery (100) according to any one of claims 1 to 3, wherein,
the second adhesive layer (74bi) is not existed, or the second adhesive layer (74bi) is existed on an outer surface of the second separator (70B) positioned on an outermost surface of the wound electrode body (20), and
when the second adhesive layer (74bi) is existed, the second adhesive layer (74bi) has a smaller weight per area on the outer surface than in a region facing the positive electrode (22).

5. The battery (100) according to any one of claims 1 to 4, wherein an area of the second adhesive layer (74bi) on an outer surface of the second separator (70B) positioned on the outermost surface of the wound electrode body (20) is 30% or less of an area of the outer surface.

6. The battery (100) according to any one of claims 1 to 5, wherein,
on a surface on a side of the second separator (70B) in contact with the positive electrode (22),
the second adhesive layer (74bi) is not existed or the second adhesive layer (74bi) is existed in a winding beginning region of the second separator (70B), and
when the second adhesive layer (74bi) is existed, the second adhesive layer (74bi) has a smaller weight per area in the winding beginning region of the second separator (70B) than in a region facing the positive electrode (22).

7. The battery (100) according to any one of claims 1 to 6, wherein,
on a surface on a side of the first separator (70A) in contact with the positive electrode (22),
a first adhesive layer (74a) is not existed, or the first adhesive layer (74a) is existed in a winding beginning region of the first separator (70A), and
when the first adhesive layer (74a) is existed, the first adhesive layer (74a) has a smaller weight per area in the winding beginning region of the first separator (70A) than in a region facing the positive electrode (22).

8. The battery (100) according to any one of claims 1 to 7, wherein, in the second separator (70B), a weight per area of the second adhesive layer (74bz) in a region positioned inward from the extending portion (28) is larger than a weight per area of the second adhesive layer (74bi) in a region facing the positive electrode (22).

9. The battery (100) according to any one of claims 1 to 8, wherein
the wound electrode body (20) has a flat shape;
the wound electrode body (20) includes a pair of curved parts (20r) in which outer surfaces are curved and a flat part (20f) in which an outer surface connecting a pair of the curved parts (20r) is flat;
a winding terminal edge of the positive electrode (22) is positioned at either of the pair of curved parts (20r); and
a winding terminal edge of the negative electrode (24) is positioned at either of the pair of curved parts (20r).
